# EUROPÄISCHE PATENTSCHRIFT

(11) **EP 3 608 563 B1**
(45) Veröffentlichungstag und Bekanntmachung des Hinweises auf die Patenterteilung: **17.03.2021**
(21) Anmeldenummer: 18187429.8
(22) Anmeldetag: 06.08.2018
(51) Int. Cl.: F16J 15/44

(54) **DICHTUNG ZUM ABDICHTEN EINES UMFANGSSPALTS ZWISCHEN ZWEI MASCHINENKOMPONENTEN**
SEAL FOR SEALING A PERIPHERAL GAP BETWEEN TWO MACHINE COMPONENTS
JOINT D'ÉTANCHÉITÉ DESTINÉ À ÉTANCHÉIFIER UNE FENTE PÉRIPHÉRIQUE ENTRE DEUX COMPOSANTS DE MACHINE

(43) Veröffentlichungstag der Anmeldung: 12.02.2020
(73) Patentinhaber: Siemens Energy Global GmbH & Co. KG, 81739 München (DE)
(72) Erfinder: Szymansky, Peter, 46149 Oberhausen (DE); Tidona, Fausto, 45131 Essen (DE)

(56) Entgegenhaltungen:
- EP-A1- 3 290 756

## Beschreibung

Die Erfindung betrifft eine Dichtung zum Abdichten eines Umfangsspalts zwischen zwei Maschinenkomponenten, wobei eine der Maschinenkomponenten relativ zu der anderen Maschinenkomponente in Axialrichtung drehbar gelagert ist, umfassend: eine Hauptdichtung mit mindestens einem Schuh zum Herstellen einer berührungsfreien Dichtung zwischen den Maschinenkomponenten und mit mindestens einem Federelement, welches den Schuh auf einer der Maschinenkomponenten derart abstützt, dass eine Radialbewegung des Schuhs als Reaktion auf die Ausübung von Fluiddruck auf den Schuh möglich ist, und eine Nebendichtung, die das Federelement in Axialrichtung abdichtet, wobei die Nebendichtung mindestens zwei Schichten aufweist, die in Axialrichtung aneinander angrenzen.

Eine Dichtung gemäß dem Oberbegriff des Anspruchs 1 ist beispielsweise aus der Veröffentlichungsschrift US 2008/100000 A1 bekannt. Die Dichtung wird insbesondere zum Abdichten des Spalts zwischen dem Rotor und dem Gehäuse einer Turbomaschine eingesetzt.

Vorteil der oben beschriebenen Dichtung ist, dass sich der Dichtspalt durch den über die Dichtung wirkenden Volumenstrom einstellt und somit flexibel bei unterschiedlicher Lage von Rotor und Gehäuse nachgeregelt wird. Dieses Wirkprinzip ist im sogenannten Schuh implementiert, welcher federnd an einem Träger aufgehängt ist. Dieses System ist das HauptdichtSystem, auch Hauptdichtung genannt.

Diese radial flexible Dichtung benötigt ein axiales Nebendicht-System bzw. eine Nebendichtung, welche ebenso flexibel den sich ändernden axialen Spalt abdichtet. Dies erfolgt beispielsweise über zwei Bleche, die jeweils mit einem Federsystem ausgestattet sind und sich demnach an einem Träger abdrücken und somit den sich öffnenden Spalt Richtung Schuh verschließen. Damit beide Federsysteme, das des Schuhs und das der Nebendichtung, reibungsarm parallel verlaufen können und zugleich auch der Bereich des Federsystems für die Nebendichtungen abgedeckt bleibt, sind zwei Bauteile, eine Zwischenplatte und ein Deckel vorgesehen. Diese weisen ein Spiel zum Hauptdichtsystem sowie einen Freiraum untereinander für das Nebendicht-System auf. Für die Anwendung in einer Gasturbine muss dieses Wirkprinzip durch sehr filigrane Bauteile realisiert werden. Dies hat zur Folge, dass sehr hohe Fertigungsgenauigkeiten eingehalten werden müssen und ein Verzug der Bauteile, sowohl durch Fertigungsungenauigkeiten als auch durch Temperatureinfluss, kann das Nebendichtsystem verklemmen und die entsprechenden dünnen Bleche der Nebendichtung können dann nicht wie gewünscht, den sich öffnenden axialen Spalt Richtung Schuh vollständig verschließen

Eine Dichtung gemäß dem Oberbegriff des Anspruchs 1 ist auch aus der Veröffentlichungsschrift EP 3 290 756 A1 bekannt.

Der Erfindung liegt die Aufgabe zugrunde, eine Dichtung anzugeben, welche gegenüber dem Stand der Technik eine erhöhte Zuverlässigkeit der Funktionalität aufweist und speziell für den Einsatz in einer Gasturbine besser geeignet ist.

Die Aufgabe wird erfindungsgemäß gelöst durch eine Dichtung zum Abdichten eines Umfangsspalts zwischen zwei Maschinenkomponenten, wobei eine der Maschinenkomponenten relativ zu der anderen Maschinenkomponente in Axialrichtung drehbar gelagert ist, umfassend: eine Hauptdichtung mit mindestens einem Schuh zum Herstellen einer berührungsfreien Dichtung zwischen den Maschinenkomponenten und mit mindestens einem Federelement, welches den Schuh auf einer der Maschinenkomponenten derart abstützt, dass eine Radialbewegung des Schuhs als Reaktion auf die Ausübung von Fluiddruck auf den Schuh möglich ist, und eine Nebendichtung, die das Federelement in Axialrichtung abdichtet, wobei die Nebendichtung mindestens zwei Schichten aufweist, die in Axialrichtung aneinander angrenzen, wobei die Schichten mindestens jeweils zwei radial nebeneinander positionierte Bleche enthalten, wobei pro Schicht eines der Bleche feststehend ist und das andere Blech beweglich gelagert ist, indem es am Schuh befestigt ist, wobei zwei bewegliche Bleche je zweier unmittelbar aneinander angrenzender Schichten in Radialrichtung betrachtet unterschiedliche Breiten aufweisen, wobei das breitere der beiden beweglichen Bleche zum Ausbilden der Schicht mit einem dünneren, feststehenden Blech kombiniert ist, und das dünnere der beiden beweglichen Bleche zum Ausbilden der Schicht mit einem breiteren, feststehenden Blech kombiniert ist, und wobei das breitere bewegliche Blech der einen Schicht das breitere feststehende Blech der jeweils anderen Schicht in Radialrichtung überlappt.

Der Erfindung liegt die Überlegung zugrunde, ein Dichtungssystem vorzuschlagen, bei dem keine weiteren Federsysteme benötigt werden, deren Anfälligkeit und aufwendige Auslegung als einer der kritischen Punkte der bekannten Nebendichtsysteme angesehen werden. Bei der vorgeschlagenen Dichtung wird insbesondere auf die Zwischenplatte verzichtet, wodurch das kritische Zusammenspiel zwischen einer Nebendichtung gemäß dem Stand der Technik und der Zwischenplatte umgegangen wird. Da kein Klemmen der Nebendichtung mehr erforderlich ist, wird die Zuverlässigkeit der Dichtung erheblich verbessert. Darüber hinaus sind die potentiellen Nacharbeiten deutlich reduziert, da Unebenheiten der Bleche der Nebendichtung keine Rolle mehr spielen. Dank des schichtweisen Aufbaus wird zudem der Aufwand beim Zusammenbau der Dichtung ebenfalls erheblich reduziert. Es sind keine aufwendig wirkenden Systeme an den Nebendichtungen mehr vorhanden, wodurch die Auslegung und die Montage vereinfacht und die Anzahl der Prüfungen beim Fertigen der Dichtung reduziert werden.

Unter Schicht wird hierbei ein einziges Blech oder eine radiale Aneinanderreihung von zwei oder mehreren Blechen verstanden, die axial die gleiche Position aufweisen.

Bei zwei Schichten überlappt die axial äußere Schicht in der maximal ausgedehnten Lage radial Teile der angrenzenden Schicht. Dies kann nun mehrmals abwechselnd erfolgen. Einmal überlappt die radiale innere Schicht und einmal überlappt die radial äußere Schicht. Die jeweils kürzeren Bleche, die den überlappenden Blechen Platz einräumen, sind nur als axiale Abstandshalter zu verstehen, damit die nächste darüber liegende Schicht wieder plan aufliegt.

Als letzte, äußerste Lage kann optional ein weiteres, einziges Blech aufgebracht werden, welches die darunterliegenden Schichten in Umfangsrichtung überlappt und direkt oder indirekt am Träger befestigt ist. Diese Schicht erfüllt eine Schutzfunktion der darunterliegenden, dünnen und empfindlichen Bleche für den Transport, den Einbau und ggf. auch für den Betrieb.

Zweckdienlicherweise sind die Bleche aus einem hochtemperaturbeständigen und/oder korrosionsbeständigen Werkstoff, insbesondere einem Stahl, ausgebildet. Die beweglichen Bleche sind insbesondere aus einem Werkstoff ausgebildet, der die erforderliche Oberflächengüte zur Ausbildung von Dichtflächen während der vorgesehenen Betriebslaufzeit beibehält und den Ansprüchen an die Festigkeit während des Betriebes in dieser Zeit genügt. Für Hochtemperaturanwendungen können hochtemperaturbeständige Stähle, Nickel- oder Kobalt-Basis-Legierungen, wie beispielsweise Inconel®, Haynes® oder vergleichbare Werkstoffe, ausgewählt werden. Für alle Anwendungen, auch mit geringeren Temperaturbelastungen, sind nicht korrodierende Werkstoffe mit ausreichender Festigkeit zweckdienlich, die die notwendige Oberflächengüte zur Ausbildung dichtender Oberflächen über die Betriebsdauer aufweisen.

Gemäß einer bevorzugten Ausführungsform sind pro Schicht in Umfangsrichtung mehrere bewegliche Bleche vorgesehen und die breiteren, beweglichen Bleche der einen Schicht überlappen die dünneren, beweglichen Bleche der anderen Schicht in Umfangsrichtung. Der dadurch erzeugte Überlapp in Umfangsrichtung verbessert zusätzlich die Dichteigenschaften der Dichtung.

Gemäß einer weiteren bevorzugten Ausführungsform sind die Schichten zumindest im Überlappungsbereich kontaktlos zueinander angeordnet. Beim Aufbau der jeweils weiteren Schichten können insbesondere temporär dünnere Bleche zwischen der darunter liegenden Schicht und der neuen Schicht eingebracht werden, die nach dem Befestigen der Bleche an ihrer Position wieder entfernt werden. Hierdurch kann ein gewisses Spiel erreicht werden, das die Reibung zwischen den Blechschichten verringert und unter Querkraft des anliegenden Druckes nicht das System blockiert.

Bevorzugt sind die Bleche einer Schicht kontaktlos zueinander angeordnet. Dies ist insbesondere während des Ausübens von Fluiddruck auf den Schuh der Dichtung der Fall. Die Radialspalte, welche zwischen den Blechen einer Schicht entstehen, sind dabei vom Überlapp der Bleche zweier unmittelbar aneinander angrenzenden Schichten in Radialrichtung und ggf. in Umfangsrichtung abgedichtet.

Vorzugsweise entspricht die Anzahl der beweglichen Bleche zumindest bei einer Schicht der Anzahl der Schuhe. Die beweglichen Bleche sind dabei kreissegmentförmig ausgestaltet und ihre Größe ist optimal an die Größe der Schuhe angepasst.

Bevorzugt ist das feststehende Blech der innersten Schicht durch eine Zwischenplatte gebildet. Diese Zwischenplatte muss derart steif sein, dass sie den Druck der anderen Blechschichten tragen kann. Dadurch werden die axialen Kräfte durch die Zwischenplatte aufgenommen. Ein Verpressen des beweglichen Schuhs wird somit unterbunden, da diese Kräfte die Funktionalität beeinträchtigen würden. Hierdurch wird ein Zusammenspiel zwischen beweglichen Teilen und steifer Außenkontur der Dichtung getrennt und die Beweglichkeit gewährleistet. Im Fall, dass neben der Zwischenplatte nur eine weitere Schicht an Nebendichtungen eingebracht wird, kann die gleiche Grundfunktionalität bei der geringsten Anzahl an Bauteilen erreicht werden.

Weiterhin bevorzugt sind die beweglichen Bleche der innersten Schicht durch einen radialen Vorsatz der Schuhe gebildet. Die beweglichen Bleche der innersten Schicht sind somit integraler Bestandteil der Schuhe, wodurch die Anzahl der erforderlichen Bauteile und der Befestigungsvorgänge zusätzlich reduziert wird.

Im Hinblick auf eine besonders gute Dichtwirkung der Dichtung sind drei Schichten vorgesehen, wobei die axial innerste Schicht und die äußerste Schicht gleich aufgebaut sind. Dabei weisen die axial innerste Schicht und die äußerste Schicht entweder jeweils ein dünnes, bewegliches Blech kombiniert mit einem breiten, feststehenden Blech und die dazwischen liegende, mittlere Schicht weist ein breites, bewegliches Blech kombiniert mit einem dünnen, feststehenden Blech auf oder umgekehrt.

Vorteilhafterweise sind die beweglichen Bleche an den Schuhen befestigt. Weiterhin von Vorteil ist, dass die Dichtung einen Träger für die Hauptdichtung aufweist, wobei die feststehenden Bleche am Träger befestigt sind. Somit wird eine sichere, störungsfreie Verbindung zwischen den beweglichen Blechen und dem Schuh und/oder zwischen den feststehenden Blechen und dem Träger hergestellt, welche sich im Betrieb nicht lösen kann. Spiele lassen sich direkt beim Schweißen einstellen durch den schichtweisen Aufbau. Darüber hinaus können Unebenheiten ignoriert werden, da die Bleche direkt aufgeschweißt werden und entsprechende Spiele durch temporäre Abstandshalter eingestellt werden können. Hierdurch entfallen insbesondere Klemm- und Zusammenbau-Vorrichtungen. Die Bleche werden dabei z.B. angeschweißt, angelötet, in entsprechenden Geometrien verstemmt oder durch additive Verfahren aufgeschmolzen oder durch Schrauben oder Nieten befestigt.

Die Aufgabe wird weiterhin erfindungsgemäß gelöst durch zwei Maschinenkomponenten, wobei eine der Maschinenkomponenten relativ zu der anderen Maschinenkomponente in Axialrichtung drehbar gelagert ist und zwischen den beiden Maschinenkomponenten ein Umfangsspalt ausgebildet ist, in dem eine Dichtung nach einem der vorhergehenden Ansprüche angeordnet ist, wobei die axiale Dicke der axial innersten Schicht derart ausgewählt ist, dass durch die Position der Nebendichtung die Größe eines Spalts zwischen dem Schuh und der gegenüberliegenden Maschinenkomponente einstellbar ist. Der Vorteil hierbei ist, dass der erforderliche, berührungsfreie Spalt zwischen der Dichtung und den Maschinenkomponenten über die Hebelwirkung der Nebendichtung, bedingt durch die Position der Bleche, in den technisch akzeptablen Grenzen eingestellt werden kann.

Im Hinblick auf eine vereinfachte Ausführung der Nebendichtung mit einer genauen axialen Positionierung der Bleche auf dem Schuh ist vorzugsweise die axial innerste Schicht lediglich als Abstandshalter ohne Dichtwirkung unter den dichtenden Schichten angeordnet.

Ausführungsbeispiele der Erfindung werden anhand einer Zeichnung näher erläutert. Hierin zeigen:
- FIG 1: eine Draufsicht auf einen segmentförmigen Ausschnitt einer Dichtung mit einer Hauptdichtung,
- FIG 2: in einer Draufsicht eine erste Ausführungsform einer Dichtung mit einer Schicht einer Nebendichtung mit sich radial überlappenden Blechen,
- FIG 3: einen Querschnitt durch die Dichtung gemäß FIG 2,
- FIG 4: in einer Draufsicht, die erste Ausführungsform der Dichtung mit einer zweiten Schicht der Nebendichtung,
- FIG 5: einen Querschnitt durch die Dichtung gemäß FIG 4,
- FIG 6: einen weiteren Querschnitt durch die Dichtung gemäß der ersten Ausführungsform mit einer dritten Schicht,
- FIG 7: eine Draufsicht auf einen segmentförmigen Ausschnitt einer Dichtung mit einer ersten Schicht einer Nebendichtung,
- FIG 8: in einer Draufsicht, eine zweite Ausführungsform einer Dichtung mit einer Schicht einer Nebendichtung mit sich in Radialrichtung sowie in Umfangsrichtung überlappenden Blechen, und
- FIG 9: einen Querschnitt durch eine dritte Ausführungsform der Dichtung.

Gleiche Bezugszeichen haben in den Figuren die gleiche Bedeutung.

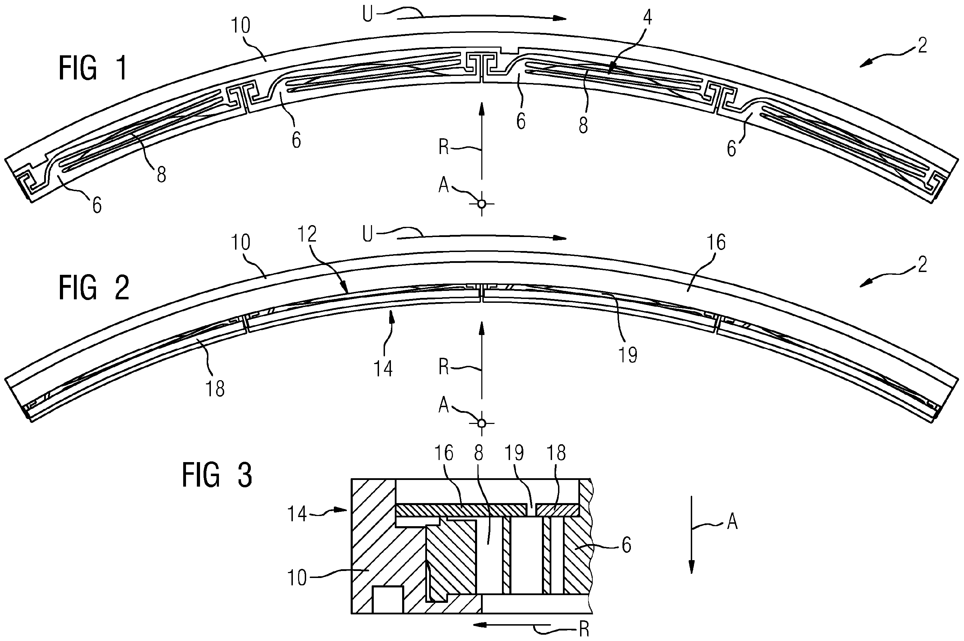

Aus FIG 1 ist ein Teil einer Dichtung 2 zum Abdichten eines Umfangsspalts zwischen zwei hier nicht näher gezeigten Maschinenkomponenten, die in Axialrichtung relativ zueinander rotierbar sind, ersichtlich. Die Axialrichtung ist symbolisch mit dem Punkt A gekennzeichnet, wobei, obwohl die Abstandsverhältnisse in der Zeichnung nicht eingehalten sind, der Punkt A die Mitte des Kreises darstellen soll, den die vollständige Dichtung 2 bildet. In FIG 1 sind zudem eine Radialrichtung R und eine Umfangsrichtung U gezeigt.

Die Dichtung 2 umfasst eine Hauptdichtung 4 mit mehreren sogenannten Schuhen 6 zum Herstellen einer berührungsfreien Dichtung zwischen den Maschinenkomponenten. Um ihre Funktion erfüllen zu können, sind die Schuhe 6 jeweils über ein Federelement 8 auf einem Träger 10 federnd gelagert. Mittels des Trägers 10 sind die Schuhe 6 auf einer der Maschinenkomponenten derart abgestützt, dass eine Radialbewegung der Schuhe als Reaktion auf die Ausübung von Fluiddruck auf die Schuhe 6, möglich ist.

Die Dichtung 2 umfasst weiterhin eine schichtweise aufgebaute Nebendichtung 12, die das Federelement 8 in Axialrichtung A abdichtet, wobei die Nebendichtung 12 mindestens zwei Schichten aufweist, die in Axialrichtung A betrachtet, aneinander angrenzen.

Eine erste Schicht 14 ist in FIG 2 und FIG 3 gezeigt. Die erste Schicht 14 ist gebildet durch zwei radial nebeneinander positionierte, kreis- oder kreissegmentförmige Bleche 16, 18. Das radial äußere Blech 16 ist feststehend, indem es auf dem Träger 10 abgestützt ist. Das radial innere Blech 18 ist beweglich gelagert, indem es am Schuh 6 befestigt ist und sich mit diesem in Radialrichtung mit bewegt. Der radiale Bauraum wird durch die beiden Bleche 16, 18 nicht symmetrisch genutzt. Eines der beiden Bleche 16, 18 ist breiter, das andere dünner, wobei diese Zuordnung beliebig ist (hier abgebildet ist der Fall, in dem das radial äußere und feststehende Blech 16 breiter ist als das innere und bewegliche Blech 18).

Die Schicht 14 ist direkt auf der Hauptdichtung aufgeschweißt und die Bleche 16, 18 sollen sich in der maximal verpressten Lage nicht berühren, daher ist zwischen den beiden Blechen 16, 18 ein Innenspalt 19 ausgebildet.

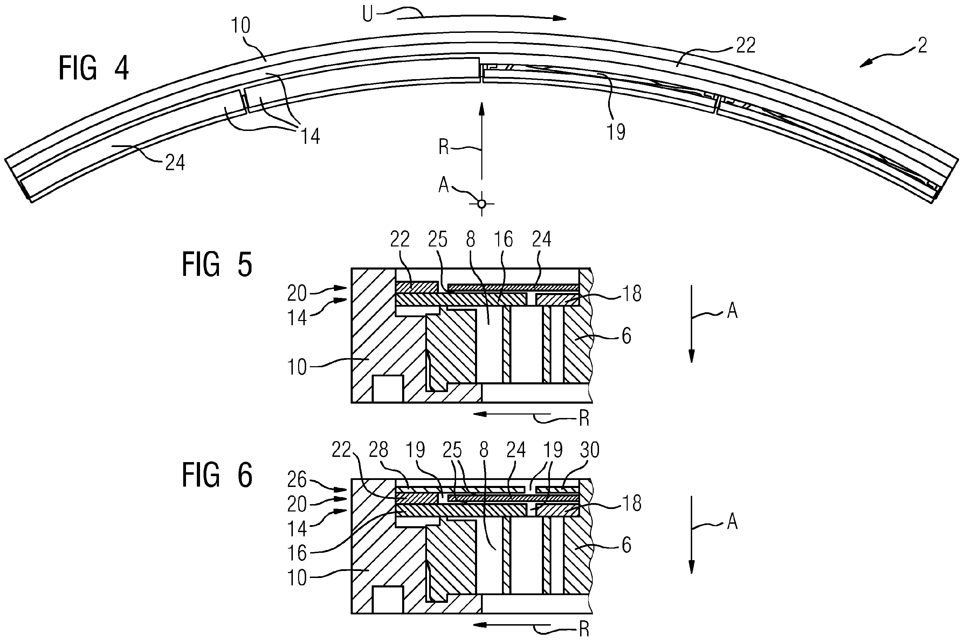

Eine zweite Schicht 20 der Dichtung 2 ist aus FIG 4 und FIG 5 ersichtlich. Die zweite Schicht 20 umfasst ebenfalls ein feststehendes Blech 22 und ein mehrteiliges, bewegliches Blech 24, wobei jedoch im Gegensatz zur ersten Schicht das zuvor radial breitere Blech in dieser Schicht dünner ausfällt und umgekehrt (hier abgebildet ist der Fall, in dem das radial äußere und feststehende Blech 22 dünner ist und das radial innere und bewegliche Blech 24 breiter ist).

Zwischen den Schichten 14, 20 ist ein Zwischenspalt 25 vorhanden, so dass die Schichten 14, 20 berührungslos zueinander gelagert sind.

Die Abwechslung von dünnen und breiten Blechen führt dazu, dass das breitere, bewegliche Blech 24 der zweiten Schicht 20 das breitere, feststehende Blech 16 der ersten Schicht 14 überlappt. Somit ist eine Sperre für ein in Axialrichtung A strömendes Fluid gebildet, so dass der Raum hinter der Nebendichtung 12, insbesondere das Federelement 8, axial abgedichtet ist.

Alternativ zur Ausführung gemäß FIG 2 bis FIG 5 ist es möglich, dass die erste Schicht 14 aus dem breiteren, beweglichen Blech kombiniert mit dem dünneren, feststehenden Blech gebildet ist und die zweite Schicht 20 aus dem dünneren, beweglichen Blech kombiniert mit dem breiteren, feststehenden Blech gebildet ist.

Die Bleche 16, 18, 22, 24 jeder Schicht 14, 20 weisen hierbei die gleiche axiale Dicke auf oder liegen zumindest in der gleichen axialen Position. Die feststehenden Bleche 16, 22 dienen dabei insbesondere als vorbereitende Fläche für die jeweils nächste Schicht, d.h. durch sie wird die Höhe für das feststehende Blech der darauf liegenden Schicht geschaffen. Dies ist auch aus FIG 6 ersichtlich, aus der ebenfalls eine dritte Schicht 26 hervorgeht. Die dritte Schicht 26 enthält ein breiteres, feststehendes Blech 28, ergänzt durch ein dünneres, bewegliches Blech 30. Im gezeigten Ausführungsbeispiel weisen die erste Schicht 14 und die dritte Schicht 26 somit den gleichen Aufbau auf. Die Dicken als auch die Spalte sind derart ausgelegt, dass die axial vorherrschende Druckkraft stets ein Berühren der Bleche 16, 18, 22, 24 gewährleistet, aber ein Verklemmen untereinander oder durch die axiale Nachgiebigkeit des Schuhs 6 unterbindet.

Bei den feststehenden Blechen 16, 22, 28 handelt es sich insbesondere um kreisförmige, halbkreisförmige oder segmentförmige Bleche. Die beweglichen Bleche 18, 24, 30 sind segmentiert. Die Anzahl der beweglichen Bleche 18, 24, 30 entspricht der der Schuhe 6, im Falle der rein radialen Überlappung entspricht auch ihre Länge in Umfangsrichtung U etwa der Länge eines Schuhs 6. Im Falle einer Überlappung in Umfangsrichtung U korrespondiert die gesamte Länge aller beweglichen Bleche 18, 24, 30 in Umfangsrichtung U etwa mit der gesamten Länge aller Schuhe 6.

Denkbar ist zudem auch, dass die dritte Schicht 26 gemäß FIG 6 lediglich aus dem breiteren, feststehenden Blech 28 besteht, welches das breitere, bewegliche Blech oder Bleche 24 der zweiten Schicht 20 überlappt.

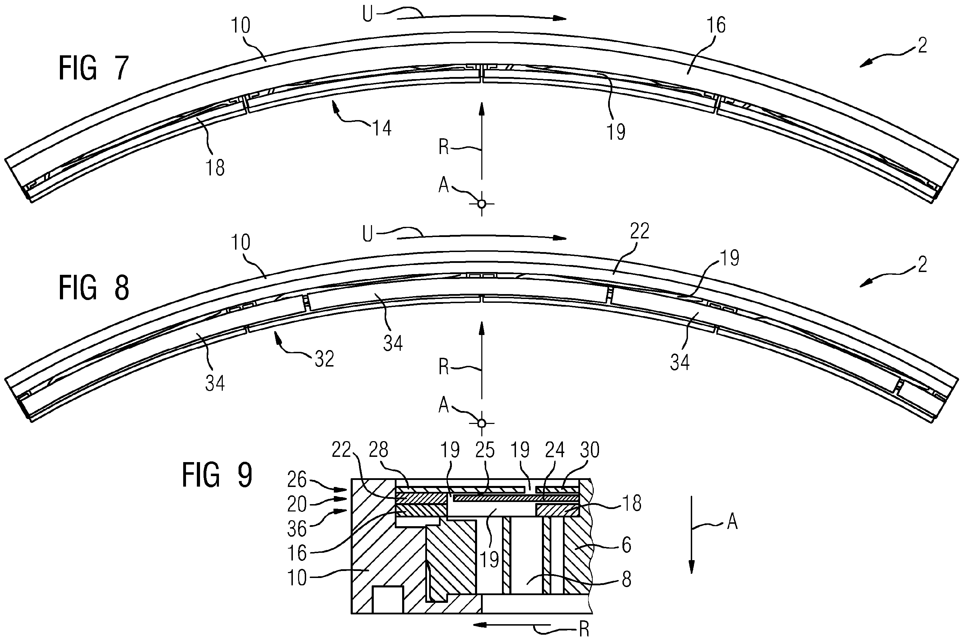

Eine weitere erfindungsgemäße Ausführungsform ist in FIG 7 und FIG 8 gezeigt. Aus FIG 7 ist eine erste Schicht 14 der Nebendichtung 12 ersichtlich, welche mit der ersten Schicht 14 gemäß FIG 2 identisch ist. Bei der weiteren Schicht 32 ist das feststehende Blech 22 ebenfalls das gleiche wie das feststehende Blech 22 gemäß FIG 4. Jedoch sind die segmentierten, beweglichen Bleche 34 in Umfangsrichtung länger ausgeführt, so dass sie die beweglichen Bleche 18 der ersten Schicht 14 überlappen. Somit erfolgt zwischen den beiden Schichten 14, 32 ein Überlapp sowohl in Radialrichtung R als auch in Umfangsrichtung U.

Vergleichbar mit dem radialen Überlapp beginnt dieser Aufbau auch mit einem in Umfangsrichtung U ununterbrochenen Blech 16 im radial äußeren, unbeweglichen Bereich und mit segmentierten, voneinander unabhängigen Bleche 18 je Schuh 6 im beweglichen Bereich. Diese Schicht 14 ist direkt auf der Hauptdichtung aufgeschweißt, durch entsprechende Nuten verstemmt, verlötet oder durch additiv gefertigte Bauweise aufgeschmolzen und soll sich in der maximal verpressten Lage nicht berühren. Diese Basislage wird zur Vermeidung von Reibungen benötigt.

Die beweglichen Bleche 24, 30 und/oder die feststehenden Bleche 22, 28 können hierbei auch bautechnisch jeweils eine Einheit bilden und als solche eingebaut werden.

Die nächste Schicht 32 hingegen unterscheidet sich von dem ersten Ansatz insoweit, dass die Überlappung von einem beweglichen Schuh 6 in Umfangsrichtung U zum nächsten Schuh 6 erfolgt. Die wieder nächste Schicht erfolgt nach dem gleichen Prinzip, überlappt jedoch in der Gegenrichtung. Hierbei können die jeweils übereinander liegenden Schichten 14, 32 ggf. durch dünne Abstandsbleche während des Schweißens, Lötens oder Verstemmens untereinander getrennt werden, damit die Reibung minimiert wird und die oben genannten anvisierten Spalte erreicht werden, die ein Dichten unter axialer Drucklast ermöglichen, aber trotz Nachgiebigkeiten der Bleche 16, 18, 22, 24 , 28, 30 selbst aber auch des Schuhs 6 und der Federelemente 8 nicht verklemmen.

Auch bei dieser Ausführungsform kann als letzte und optionale Lage ein einziges, etwas dickeres Schutzblech (hier nicht gezeigt) durchgängig im radial äußeren Bereich aufgebracht werden, welches die segmentierten, voneinander unabhängigen Bleche 34 im radial inneren Bereich darunter überlappt. Falls in den Schichten darunter keine Bleche im radial äußeren, unbeweglichen Bereich eingebracht wurden, muss der entsprechende Spalt (axiale Bauhöhe dieser Bleche) berücksichtigt werden. Falls dieses optionale Blech eingebracht wird, muss es derart steif sein, dass der Druck auf das Blechpaket getragen werden kann. Auch hier ist das Einbringen eines Mindestspiels durch eine temporäre, dünne Zwischenschicht während des Fügens zur Vermeidung höherer Reibungen sinnvoll.

In FIG 9 ist eine weitere Ausführungsform gezeigt, bei der die Dichtwirkung der Nebendichtung 12 lediglich durch die zweite Schicht 20 und die dritte Schicht 26 hergestellt wird. Die erste Schicht 36 ist eine Abstandsschicht und umfasst hierbei sowohl ein dünnes, feststehendes Blech 16 als auch ein dünnes, bewegliches Blech 18, zwischen denen ein großer Innenspalt 19 vorhanden ist. Durch diese Schicht 34 aus feststehenden 16 und beweglichen Blechen 18 ohne direkte Dichtwirkung unter den dichtenden Schichten 20, 26 wird die axiale Position der dichtenden Schichten 20, 26 derart definiert, dass der angeforderte, berührungsfreie Spalt zwischen der Dichtung und der drehbaren Maschinenkomponenten (Rotor) in den technisch akzeptablen Grenzen eingestellt werden kann. Wird die Position der Nebendichtung 12 durch eine dickere Abstandsschicht 36 axial stromaufwärts verlagert, dann öffnet sich der Spalt zwischen der Hauptdichtung 4 und der rotierenden Maschinenkomponente. Wird die Abstandsschicht 36 verringert und daher die Position der Nebendichtungen 12 axial stromabwärts verlagert, dann schließt sich der Spalt zwischen der Hauptdichtung 12 und der rotierenden Maschinenkomponente. Daher kann mit Hilfe der Einstellung der Dicke dieser Zwischenschicht vor dem finalen Fügen jede Dichtung einer Qualitätsprüfung unterzogen werden, die passende Dicke dieser Abstandsschicht 36 kann ausgewählt werden, um den Ansprüchen an den Spalt zwischen der Hauptdichtung 4 und der rotierenden Maschinenkomponente zu genügen und anschließend final montiert und gefügt zu werden.

## Patentansprüche

1. Dichtung (2) zum Abdichten eines Umfangsspalts zwischen zwei Maschinenkomponenten, wobei eine der Maschinenkomponenten relativ zu der anderen Maschinenkomponente in Axialrichtung (A) drehbar gelagert ist, umfassend:
eine Hauptdichtung (4) mit mindestens einem Schuh (6) zum Herstellen einer berührungsfreien Dichtung zwischen den Maschinenkomponenten und mit mindestens einem Federelement (8), welches den Schuh (6) auf einer der Maschinenkomponenten derart abstützt, dass eine Radialbewegung (R) des Schuhs (6) als Reaktion auf die Ausübung von Fluiddruck auf den Schuh (6) möglich ist,
und eine Nebendichtung (12), die das Federelement (8) in Axialrichtung (A) abdichtet, wobei die Nebendichtung (12) mindestens zwei Schichten (14, 20) aufweist, die in Axialrichtung (A) aneinander angrenzen,
**dadurch gekennzeichnet, dass**
- die Schichten (14, 20) mindestens jeweils zwei radial nebeneinander positionierte Bleche (16, 18, 22, 24) enthalten,
- pro Schicht eines der Bleche feststehend (16, 22) ist und das andere Blech (18, 24) beweglich gelagert ist, indem es am Schuh (6) befestigt ist, wobei
- zwei bewegliche Bleche (24, 30) je zweier unmittelbar aneinander angrenzender Schichten (14, 20), in Radialrichtung (R) betrachtet, unterschiedliche Breite aufweisen, wobei das breitere der beiden beweglichen Bleche (24) zum Ausbilden der Schicht (20) mit einem dünneren, feststehenden Blech (22) kombiniert (22) ist, und das dünnere (30) der beiden beweglichen Bleche (18) zum Ausbilden der Schicht (14) mit einem breiteren, feststehenden Blech (16) kombiniert ist, und
- das breitere bewegliche Blech (24) der einen Schicht (20) das breitere feststehende Blech (16) der jeweils anderen Schicht (14) in Radialrichtung (R) überlappt.

2. Dichtung (2) nach Anspruch 1,
**dadurch gekennzeichnet, dass** pro Schicht (14, 32) in Umfangsrichtung (U) mehrere bewegliche Bleche (18, 34) vorgesehen sind und die breiteren, beweglichen Bleche (34) der einen Schicht (32) die dünneren, beweglichen Bleche (18) der anderen Schicht (14) in Umfangsrichtung (U) überlappen.

3. Dichtung (2) nach einem der vorhergehenden Ansprüche, **dadurch gekennzeichnet, dass** die Schichten (14, 20, 26, 32) zumindest im Überlappungsbereich kontaktlos zueinander angeordnet sind.

4. Dichtung (2) nach einem der vorhergehenden Ansprüche, **dadurch gekennzeichnet, dass** die Bleche (16, 18, 22, 24, 28, 30) einer Schicht (14, 20, 26, 32) kontaktlos zueinander angeordnet sind.

5. Dichtung (2) nach einem der vorhergehenden Ansprüche, **dadurch gekennzeichnet, dass** zumindest bei einer Schicht (14, 20, 26, 32) die Anzahl der beweglichen Bleche (18, 24, 30) der Anzahl der Schuhe (6) entspricht.

6. Dichtung (2) nach einem der vorhergehenden Ansprüche, **dadurch gekennzeichnet, dass** das feststehende Blech (16) der innersten Schicht (14) durch eine Zwischenplatte gebildet ist.

7. Dichtung (2) nach einem der vorhergehenden Ansprüche, **dadurch gekennzeichnet, dass** die beweglichen Bleche (18) der innersten Schicht (14) durch einen radialen Vorsatz der Schuhe (6) gebildet sind.

8. Dichtung (2) nach einem der vorhergehenden Ansprüche, **dadurch gekennzeichnet, dass** drei Schichten (14, 20, 26) vorgesehen sind, wobei die axial innersten und äußersten Schichten (14, 26) gleich aufgebaut sind.

9. Dichtung (2) nach einem der vorhergehenden Ansprüche,
**gekennzeichnet durch,** einen Träger (10) für die Hauptdichtung (4), wobei die feststehenden Bleche (16, 22, 28) am Träger (10) befestigt sind.

10. Einheit umfassend zwei Maschinenkomponenten, wobei eine der Maschinenkomponenten relativ zu der anderen Maschinenkomponente in Axialrichtung (A) drehbar gelagert ist und zwischen den beiden Maschinenkomponenten ein Umfangsspalt ausgebildet ist, in dem eine Dichtung nach einem der vorhergehenden Ansprüche angeordnet ist,
**dadurch gekennzeichnet, dass** die axiale Dicke der axial innersten Schicht (14) derart ausgewählt ist, dass durch die Position der Nebendichtung (12) die Größe eines Spalts zwischen dem Schuh (6) und der gegenüberliegenden Maschinenkomponente einstellbar ist.

11. Einheit nach Anspruch 10,
**dadurch gekennzeichnet, dass** die axial innerste Schicht (36) lediglich als Abstandshalter ohne Dichtwirkung unter den dichtenden Schichten (20, 26) angeordnet ist.

## Claims

1. Seal (2) for sealing a circumferential gap between two machine components, one of the machine components being mounted such that it can be rotated in the axial direction (A) relative to the other machine component, comprising:
a main seal (4) with at least one shoe (6) for establishing a contact-free sealing action between the machine components, and with at least one spring element (8) which supports the shoe (6) on one of the machine components in such a way that a radial movement (R) of the shoe (6) is possible as a reaction to the exertion of fluid pressure on the shoe (6),
and an auxiliary seal (12) which seals the spring element (8) in the axial direction (A), the auxiliary seal (12) having at least two layers (14, 20) which adjoin one another in the axial direction (A),
**characterized in that**
- the layers (14, 20) comprise at least in each case two sheets (16, 18, 22, 24) which are positioned radially next to one another,
- per layer, one of the sheets (16, 22) is stationary and the other sheet (18, 24) is mounted movably, by being fastened to the shoe (6),
- two movable sheets (24, 30) of in each case two layers (14, 20) which adjoin one another directly having a different width, as viewed in the radial direction (R), the wider one of the two movable sheets (24) being combined (22) with a thinner, stationary sheet (22) in order to configure the layer (20), and the thinner one (30) of the two movable sheets (18) being combined with a wider, stationary sheet (16) in order to configure the layer (14), and
- the wider movable sheet (24) of the one layer (20) overlapping in the radial direction (R) with the wider stationary sheet (16) of the respective other layer (14).

2. Seal (2) according to Claim 1,
**characterized in that,** per layer (14, 32), a plurality of movable sheets (18, 34) are provided in the circumferential direction (U), and the wider, movable sheets (34) of the one layer (32) overlap in the circumferential direction (U) with the thinner, movable sheets (18) of the other layer (14).

3. Seal (2) according to either of the preceding claims, **characterized in that** the layers (14, 20, 26, 32) are arranged out of contact with one another at least in the overlapping region.

4. Seal (2) according to one of the preceding claims, **characterized in that** the sheets (16, 18, 22, 24, 28, 30) of one layer (14, 20, 26, 32) are arranged out of contact with one another.

5. Seal (2) according to one of the preceding claims, **characterized in that,** at least in the case of one layer (14, 20, 26, 32), the number of movable sheets (18, 24, 30) corresponds to the number of shoes (6).

6. Seal (2) according to one of the preceding claims, **characterized in** t**hat** the stationary sheet (16) of the innermost layer (14) is formed by way of an intermediate plate.

7. Seal (2) according to one of the preceding claims, **characterized in that** the movable sheets (18) of the innermost layer (14) are formed by way of a radial attachment of the shoes (6) .

8. Seal (2) according to one of the preceding claims, **characterized in that** three layers (14, 20, 26) are provided, the axially innermost and outermost layers (14, 26) being of identical construction.

9. Seal (2) according to one of the preceding claims, **characterized by** a carrier (10) for the main seal (4), the stationary sheets (16, 22, 28) being fastened to the carrier (10) .

10. Unit comprising two machine components, one of the machine components being mounted such that it can be rotated in the axial direction (A) relative to the other machine component, and a circumferential gap being configured between the two machine components, in which circumferential gap a seal according to one of the preceding claims is arranged, **characterized in that** the axial thickness of the axially innermost layer (14) is selected in such a way that the size of a gap between the shoe (6) and the opposite machine component can be set by way of the position of the auxiliary seal (12).

11. Unit according to Claim 10,
**characterized in that** the axially innermost layer (36) is arranged below the sealing layers (20, 26) merely as a spacer element without a sealing action.

## Revendications

1. Joint (2) d'étanchéité pour rendre étanche une fente périphérique entre deux éléments de machine, l'un des éléments de machine étant monté tournant dans la direction (A) axiale par rapport à l'autre élément de machine, comprenant :
une étanchéité (4) principale ayant au moins un sabot (6) pour donner une étanchéité sans contact entre les éléments de machine et ayant au moins un élément (8) de ressort, qui appuie le sabot (6) sur l'un des éléments de machine de manière à rendre possible un déplacement (R) radial du sabot (6) en réaction à l'application d'une pression de fluide au sabot (6), et une étanchéité (12) secondaire, qui rend étanche l'élément (8) de ressort dans la direction (A) axiale, l'étanchéité (12) secondaire ayant au moins deux couches (14, 20) qui sont voisines l'une de l'autre dans la direction (A) axiale,
**caractérisé en ce que**
- les couches (14, 20) comportent au moins chacune deux tôles (16, 18, 22, 24) mises en position les unes à côté des autres radialement,
- par couche, l'une des tôles est fixe (16, 22) et l'autre tôle (18, 24) est montée mobile par le fait qu'elle est fixée au sabot (6), dans lequel
- deux tôles (24, 30) mobiles de respectivement deux couches (14, 20) immédiatement voisines, considéré dans la direction (R) radiale, ont des largeurs différentes, la plus large des deux tôles (24) mobiles étant, pour constituer la couche (20), combinée (22) à une tôle (22) fixe plus mince et la plus mince (30) des deux tôles (18) mobiles étant, pour constituer la couche (14), combinée à une tôle (16) fixe plus large et
- la tôle (14) mobile plus large de la une couche (20) chevauche la tôle (16) fixe plus large de respectivement l'autre couche (14) dans la direction (R) radiale.

2. Joint (2) d'étanchéité suivant la revendication 1, **caractérisé en ce que** par couche (14, 32) dans la direction (U) périphérique, il est prévu plusieurs tôles (18, 34) mobiles et les tôles (34) mobiles plus larges de l'une des couches (32) chevauchent les tôles (18) mobiles plus minces de l'autre couche (14) dans la direction (U) périphérique.

3. Joint (2) d'étanchéité suivant l'une des revendications précédentes,
**caractérisé en ce que** les couches (14, 20, 26, 32) sont disposées sans contact les unes avec les autres, au moins dans la partie de chevauchement.

4. Joint (2) d'étanchéité suivant l'une des revendications précédentes,
**caractérisé en ce que** les tôles (16, 18, 22, 24, 28, 30) d'une couche (14, 20, 26, 32) sont disposées sans contact entre elles.

5. Joint (2) d'étanchéité suivant l'une des revendications précédentes,
**caractérisé en ce qu'**au moins pour une couche (14, 20, 26, 32), le nombre des tôles (18, 24, 30) mobiles correspond au nombre des sabots (6).

6. Joint (2) d'étanchéité suivant l'une des revendications précédentes,
**caractérisé en ce que** la tôle (16) fixe de la couche (14) la plus à l'intérieur est formée d'une plaque intermédiaire.

7. Joint (2) d'étanchéité suivant l'une des revendications précédentes,
**caractérisé en ce que** les tôles (18) mobiles de la couche (14) la plus à l'intérieur sont formées d'une avancée radiale du sabot (6).

8. Joint (2) d'étanchéité suivant l'une des revendications précédentes,
**caractérisé en ce qu'**il est prévu trois couches (14, 20, 26), les couches (14, 26) les plus à l'intérieur et les plus à l'extérieur axialement étant constituées pareillement.

9. Joint (2) d'étanchéité suivant l'une des revendications précédentes,
**caractérisé par** un support (10) de l'étanchéité (4) principale, les tôles (16, 22, 28) fixes étant fixées au support (10).

10. Unité comprenant deux éléments de machine, l'un des éléments de machine étant monté tournant dans la direction (A) axiale par rapport à l'autre élément de machine et entre les deux éléments de machine est constituée une fente périphérique dans laquelle un joint d'étanchéité suivant l'une des revendications précédentes est disposé,
**caractérisée en ce que** l'épaisseur axiale de la couche (14) la plus à l'intérieur axialement est choisie de manière à pouvoir régler, par la position de l'étanchéité (12) secondaire, la dimension d'une fente entre le sabot (6) et l'élément de machine opposé.

11. Unité suivant la revendication 10,
**caractérisé en ce que** la couche (36) la plus à l'intérieur axialement est disposée simplement sous la forme d'une entretoise, sans effet d'étanchéité, sous les couches (20, 26) donnant de l'étanchéité.
